# EUROPEAN PATENT SPECIFICATION

(11) **EP 1 882 922 B1**
(45) Date of publication and mention of the grant of the patent: **21.03.2012**
(21) Application number: 07014504.0
(22) Date of filing: 24.07.2007
(51) Int. Cl.: G01M 13/02

(54) **Method of diagnosing abnormality of reduction gear and apparatus for carry out the method**
Verfahren zur Diagnose ungewöhnlichen Verhaltens eines Untersetzungsgetriebes und Vorrichtung zur Ausführung des Verfahrens
Procédé de diagnostic des anomalies d'engrenage de réduction et appareil pour mettre en oeuvre le procédé

(30) Priority: 27.07.2006 JP 2006204886
(43) Date of publication of application: 30.01.2008
(73) Proprietor: FANUC CORPORATION, Oshino-mura Minamitsuru-gun Yamanashi 401-0597 (JP)
(72) Inventor: Kato, Tetsuaki, Hadano-shi, Kanagawa 259-1326 (JP); Kuroshita, Teruki, Minamitsuru-gun, Yamanashi 401-0511 (JP)
(74) Representative: Thum, Bernhard

(56) References cited:
- WO-A1-2005/111571
- US-A- 6 128 959
- US-A1- 2002 116 108

## Description

### Background of the Invention

### 1. Field of the Invention

The present invention relates to a method of diagnosing abnormality of a reduction gear and an apparatus for carry out the method, in which the reduction gear has an intermediate shaft, for example, a crankshaft for eccentrically rotating an external gear in engagement with an internal gear, disposed between an input shaft and an output shaft for rotating in proportion to the rotation of the input shaft in order to transmit the rotation.

### 2. Related Art

As a method of diagnosing abnormality of a reduction gear, a method has been previously known in which an abnormality of a reduction gear is diagnosed based on information sent from a sensor mounted on the target part to be diagnosed. While this method has been very effective because of its ability to non-destructively detect an abnormality of a robot or a machine tool, it also has various disadvantages in that the abnormality can only be detected after the anomaly has occurred. For example, it takes a long period of time to repair a reduction gear and restore a normality of a robot. At the production site, when the abnormality is detected during the operation of a robot, the entire production line has to be shut-down until the normality of the robot is restored.

Therefore, as an example of a method of diagnosing abnormality of a reduction gear, the method in which the above-described problem can be avoided by estimating the possibility of an occurrence of an abnormality before it actually occurs, a method disclosed in Japanese Patent Publication No. H05-52712 has been known. In this method, vibration of a joint to be diagnosed is detected with a sensor provided at the free working end of a robot, and by comparing the detected vibration with the vibration of a normal robot and estimating the comparison, an abnormality of the joint can be recognized in advance. An abnormality of a joint is caused by wear, degradation of a bearing, a gear, a reduction gear, or the like. An abnormality of a joint can be diagnosed by comparing the mean values and peak values of the frequency components of the vibration waveform during an abnormal operation with those during a normal operation.

With the conventional method as described above, there is a problem that, since various noises are contained in the signal detected by the sensor, it is not possible to directly extract only such a signal, which is effective for the diagnosis of the joint and to accurately predict an occurrence of an abnormality from the detected signal. In other words, in the conventional method in which it is estimated that a fault may soon occur soon if the difference between the frequency components of the signal detected by the sensor and the frequency components of the signal during normal operation is large, it is not easy to distinguish an abnormality from a normality of the joint unambiguously when noise is contained in the detected signal, and is mixed with the signal reflecting the abnormality of the joint.

There is also a problem that, since the signal detected by the sensor may vary with the influence of gravity, the magnitude of the detected signal depends upon the position and the attitude of the joint and does not remain constant so that the reliability of the diagnostic result may be impaired.

There is also another problem in that the robot or the machine tool needs to be provided with a sensor for detecting an abnormality which results in additional cost being required for purchasing the sensor.

US6128959 discloses a driveline vibration analyzing tool which measures speed fluctuations between adjacent teeth of a gear. The signal is spectrum analyzed and torsional vibration frequencies are detected.

### Summary of the Invention

It is an object of the present invention to provide a method of diagnosing abnormality of a reduction gear and an apparatus for carry out the method, in which the reduction gear is capable of accurately diagnosing an abnormality by introducing quantitative criteria for judgment and which is capable of increasing availability of machines and improving production efficiency.

In order to obtain the above object, in accordance with an aspect of the present invention, there is provided a method of diagnosing abnormality of a reduction gear, the reduction gear including an intermediate shaft element disposed between an input shaft and an output shaft and rotating in proportion to a rotation of the input shaft to transmit the rotation to the output shaft, the method comprising: estimating, by means of a disturbance observer, an estimated disturbance value with regard to the reduction gear based on a torque instruction value and a velocity feedback-value acquired while a pair of driven members rotated relatively by an electric motor as a driving source is rotated at a constant velocity relative to each other; extracting specific spectral components corresponding to constant multiples of a rotational frequency of the intermediate shaft element from a frequency component of the estimated disturbance value obtained by frequency analysis; comparing the amplitude of the specific spectral component with a threshold value; diagnosing an abnormality in a case where the amplitude of the specific spectral component exceeds the threshold value, or a normality in a case where the amplitude of the specific spectral component is equal to or less than the threshold value.

In accordance with this invention, since the estimated disturbance value that reflects the operating state of the reduction gear is used for diagnosis, it is possible to exclude noise from the data, and therefore, diagnosis of an abnormality of the reduction gear can be directly and accurately performed. Further, since the estimated disturbance value is obtained by means of a disturbance observer, data unaffected by gravity can be obtained, and the abnormality of the reduction gear can be accurately diagnosed independently of the position and attitude of the robot or the machine tool. Extraction of specific spectral components of the estimated disturbance value at the frequencies corresponding to constant multiples of the rotational frequency of the intermediate shaft element, permits an optimal spectral component for diagnosing an abnormality of the reduction gear to be sampled. Thus, diagnosis of an abnormality of the reduction gear can be accurately performed based on quantitative criteria for judgment, so that machine availability can be increased and production efficiency can be improved.

In accordance with another aspect of the present invention, there is provided a method of diagnosing abnormality of a reduction gear, for diagnosing an abnormality of a reduction gear, the reduction gear including an intermediate shaft element disposed between an input shaft and an output shaft and rotating in proportion to a rotation of the input shaft to transmit the rotation to the output shaft, the method comprising: calculating acceleration based on a velocity feedback-value acquired while a pair of driven members rotated relatively by an electric motor as a driving source is rotated at a constant velocity relative to each other; extracting a specific spectral component, corresponding to a constant multiple of a rotational frequency of the intermediate shaft element, from a frequency component of the acceleration obtained by a frequency analysis; comparing an amplitude of the specific spectral component with a threshold value; and diagnosing an abnormality in a case where the amplitude of the specific spectral component exceeds the threshold value, or a normality in a case where the amplitude of the specific spectral component is equal to or less than the threshold value.

In accordance with this invention, by using the acceleration data that reflects the operating state of the reduction gear, an abnormality of the reduction gear can be accurately diagnosed. Therefore, the same operative effect can be obtained as in the invention described above, and diagnosis of an abnormality of a reduction gear can be accurately performed based on quantitative criteria for judgment.

In the method of diagnosing abnormality of a reduction gear, the threshold value corresponds to an amplitude of a spectral component extracted from a frequency component of the estimated disturbance value or the acceleration value obtained by the frequency analysis at a frequency corresponding to a constant multiple of the rotational frequency of the intermediate shaft element.

In accordance with this method, when the amplitude of the specific spectral component is equal to or less than the threshold value, the reduction gear can be diagnosed to be normal. However, when the amplitude of the specific spectral component exceeds the threshold value, the reduction gear can be diagnosed to be abnormal.

Also, in accordance with an aspect of the present invention, there is provided an apparatus for carry out a method of diagnosing abnormality of a reduction gear, the reduction gear including an intermediate shaft element disposed between an input shaft and an output shaft and rotating in proportion to a rotation of the input shaft to transmit the rotation to the output shaft, the apparatus comprising: a disturbance observer that obtains an estimated disturbance value with regard to the reduction gear based on a torque instruction value and a velocity feedback-value acquired while a pair of driven members rotated relatively by an electric motor as a driving source is rotated at a constant velocity relative to each other, a spectral component specifying portion for extracting, from a frequency component of the estimated disturbance value obtained by a frequency analysis, a specific spectral component at a frequency corresponding to a constant multiple of a rotational frequency of the intermediate shaft element, and a diagnosing portion for comparing an amplitude of the specific spectral component with a threshold value, diagnosing an abnormality in a case where the amplitude of the specific spectral component exceeds the threshold value, or a normality in a case where the amplitude of the specific spectral component is equal to or less than the threshold value.

### Brief Description of the Drawings

The above and other objects, features and advantages of the present invention will become more apparent from the following description of preferred embodiments with reference to appended drawings, in which:
Fig. 1 is a view showing the system construction comprising an apparatus for carry out a method of diagnosing abnormality of a reduction gear according to an embodiment of the present invention;

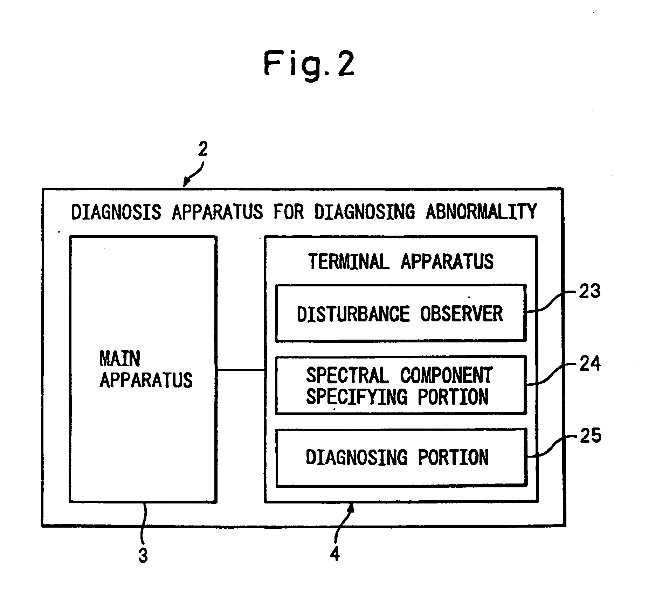

Fig. 2 is a view showing the construction of the apparatus;
Fig. 3 is a flow chart showing the flow of processing performed in the method; and
Fig. 4 is a view useful for explaining the step S4 of Fig. 3 in detail.

### Detailed Description

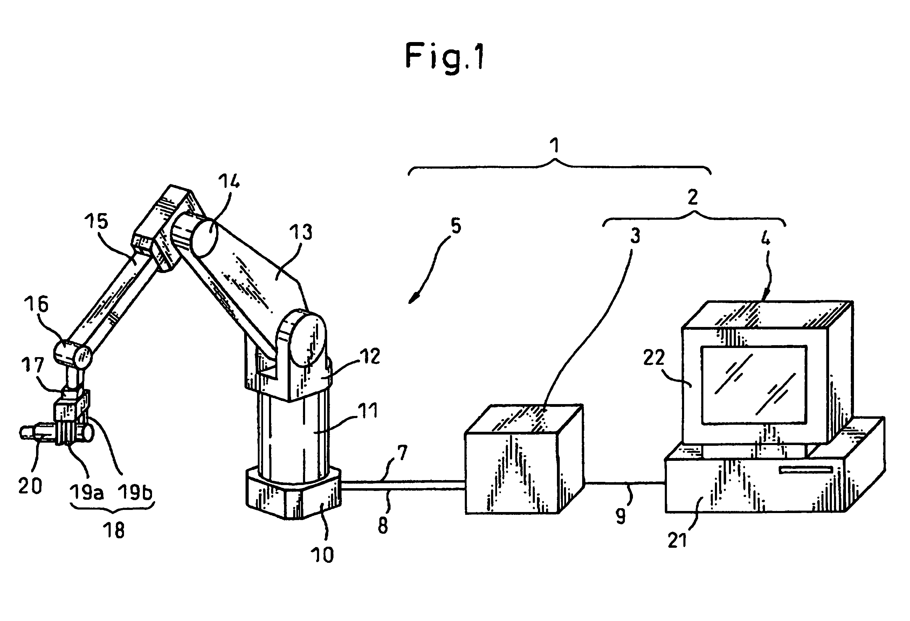

The present invention will be described in detail below with reference to the drawings showing specific examples of embodiments thereof. Fig. 1 is a view showing the system construction comprising an apparatus for carry out a method of diagnosing abnormality of a reduction gear according to an embodiment of the present invention. The apparatus 2 is a diagnosis apparatus that diagnoses an abnormality such as a failure of an input shaft as a fiction abnormality of an unshown reduction gear, and is composed of a main apparatus 3 for controlling a robot 5 and a terminal apparatus 4 for sending and receiving a signal to and from the main apparatus 3. A diagnosis system 1 is composed of the diagnosis apparatus 2 and the robot 5 comprising a reduction gear integrated with a motor as one unit. The robot 5 and the main apparatus 3 are electrically interconnected to each other via a power cable 7 and a signal line 8. The main apparatus 3 and the terminal apparatus 4 are electrically interconnected to each other via a LAN cable 9. Each of these components will be described in detail below.

The robot 5 is a typical robot generally used for fitting work of fitted parts, and is composed of a base 1.0, a trunk 11 connected to the base 10, an upper arm 13 connected to the trunk 11 via a first joint 12, a forearm 15 connected to the upper arm 13 via a second joint 14, a wrist element 17 connected to the forearm 15 via a third joint 16, and a hand tool 18 connected to the wrist element 27. The hand tool 18 is provided with a pair of grasping jaws 19a, 19b opposed to each other. A pair of grasping portions 19a, 19b is adapted to grasp a work piece 20 therebetween.

The first, second and third joints 12, 14, 16 are members with which adjoining moving members (driven members) are rotationally moved relative to each other and which are provided with motors having reduction gears. The rotation of the motor is reduced in speed so as to rotationally move adjoining moving members relative to each other. The moving members correspond to the upper arm 13, the forearm 15, and the wrist element 17. The reduction gear is of general type and is comprised of an internal gear provided fixedly on the tube wall, an external gear in engagement with the internal gear, and a crankshaft (intermediate shaft) fitted to the external gear for eccentrically rotating the external gear. The number of teeth of the internal gear is greater by one than that of the external gear, so that, when the external gear rotates together with the crankshaft for one complete rotation, the internal gear is rotated for one pitch in the opposite direction. Thus, in this speed reduction mechanism, the input rotation is reduced with at least the reciprocal of the number of teeth of the external gear as a reduction ratio.

The main apparatus 3 connected via the cable 9 to the robot 5 is constructed as in the prior art and comprises an unshown processor, a ROM, a RAM, a nonvolatile memory, various interfaces, and a digital servo circuit consisting of a transmission control circuit and a reception control circuit. Various memories, various interfaces, and the digital servo circuit are connected to the processor via a system bus. The digital servo circuit performs the position loop control and velocity loop control based on the servo motor feedback data, and performs the current loop control based on the current feedback signal from a servo amplifier such as a transistor inverter. Sensors, a display monitor, and a CCD camera can be connected to the interfaces.

The terminal apparatus 4 corresponds to a personal computer comprising a main body 21 and a display 22, and comprises a disturbance observer 23 for estimating an estimated value of disturbance, a spectral component specifying portion 24 for extracting the specific spectral components corresponding to multiples of the rotational frequency of the crankshaft multiplied by constant factors from the frequency components of the estimated disturbance value, a diagnosing portion 25 for comparing the amplitude of the specific spectral component with a threshold value based on the amplitude obtained with the normality of the crankshaft and estimating the presence or absence of an abnormality.

The main body 21 stores a system program and an operating program, and in the case of manual operation, when an operator inputs necessary information via an unshown keyboard, a diagnosis program is started, and the disturbance observer 23, the spectral component specifying portion 24, and the diagnosing portion 25 respectively function.

The disturbance observer 23 is provided for estimating the disturbance torque (estimated disturbance value) on the reduction gear base on a torque instruction value and a velocity feedback-value that are obtained while a pair of moving members rotated relatively by a motor, are rotating at a constant velocity (with a constant period) relative to each other.

The spectral component specifying portion 24 extract specified target spectral components (specific spectral components) corresponding to multiples of the rotational frequency of the crankshaft multiplied by constant factors while a pair of moving members are moving relatively at a constant velocity from the frequency components obtained by a frequency analysis of the time sequence data of the disturbance torque.

The diagnosing portion 25 compares the target spectral component specified by the spectral component specifying portion with the reference spectral component as a threshold value that is obtained by a frequency analysis of the disturbance torque during normal operation of the crankshaft, and diagnose an abnormality when the amplitude of the target spectral component exceeds that of the reference spectral component as a whole or selectively, and diagnose as a normality when the amplitude of the target spectral component is equal to or less than that of the reference spectral component.

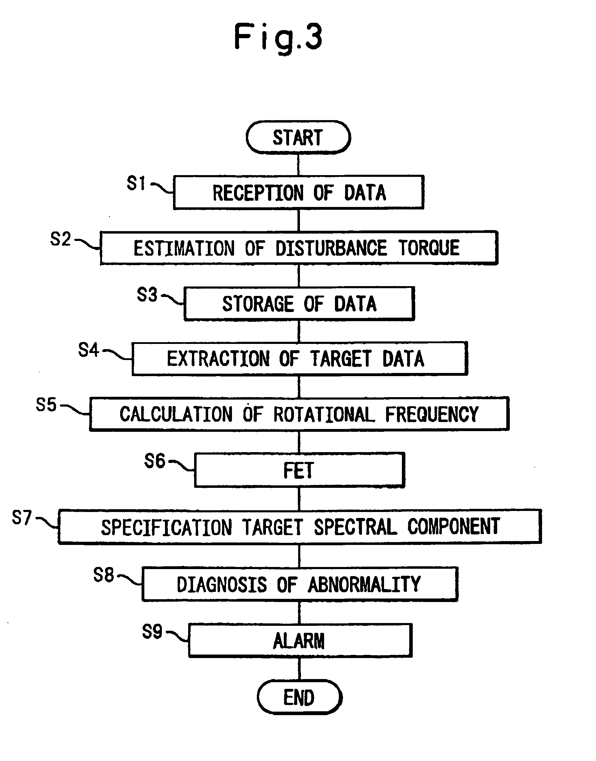

Next, the diagnosis method will be described based on the flow chart of Fig. 3 using the robot 5 shown in Fig. 1 as an object and in accordance with the flow chart. Although the robot 5 as shown in Fig. 1 is a robot provided with three rotational axes, the diagnosis method will be described, for the sake of simplicity, by focusing on a joint of an arbitrary axis.

The reduction gear to be diagnosed comprises a first stage reduction gear and a second stage reduction gear such that, by means of the first stage reduction gear, N rotations of the motor output shaft is reduced to n rotations of the crankshaft, and by means of the second stage reduction gear, n rotations of the crankshaft is reduced to one rotation on the output side (on the side of the internal gear). Thus, the reduction gear as a whole reduces the rotational speed of the motor by the reduction ratio of 1/N.

At step S1, the terminal apparatus 4 receives the velocity feedback-value and the torque instruction value from the main apparatus 3 at a predetermined sampling period Δt. At step S2, the disturbance torque containing the period component in synchronicity with the rotational period of the crankshaft is estimated by the disturbance observer 23 from the received velocity feedback-value and the torque instruction value. At step S3, the velocity feedback-value, the torque instruction value and the estimated disturbance torque are stored as time-sequence data.

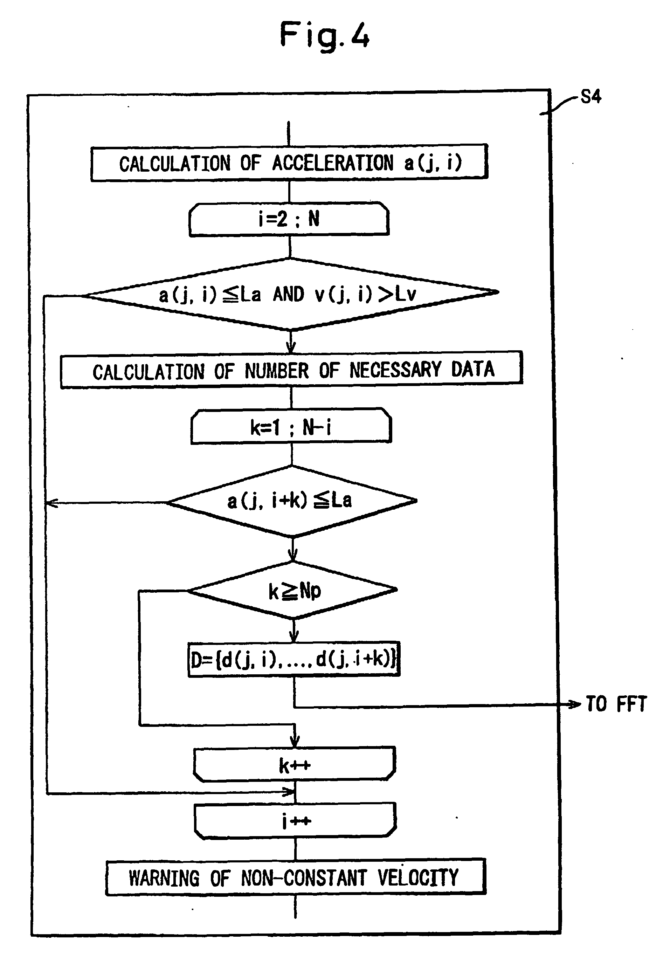

Next, at step 54, the target data when the velocity feedback-value v is larger than a threshold value Lv and the joint is rotating at a constant relative rotation, is extracted. Fig. 4 is a view showing a target data extraction routine in detail. As shown, first, an acceleration a is calculated from the velocity feedback-value. If the acceleration a is contained within a predetermined threshold value La continuously for a constant sampling period Td or longer, the joint is regarded to be in relative rotation at a constant velocity, and the time sequence data of the disturbance torque in this sampling period Td are extracted. The number of data Np of the extracted disturbance torque is at least the period Tp of one complete rotation of the crankshaft divided by the sampling period Δt or greater. That is, the number of data Np is not less than Tp/Δt. The period of one complete rotation of the crankshaft is calculated as the reciprocal of the rotational frequency Vp of the crankshaft.

Next, at step S5, the rotational frequency Vp of the crankshaft is calculated as the initial velocity feedback-value v₀ extracted in the constant period Td multiplied by the reduction ratio n/N, that is, the ratio of n rotations of the crankshaft divided by N rotations of the motor output shaft (Vp = v₀ × (n/N)).

After the required number of data sequence of the disturbance torques has been provided, frequency analysis (Fourier analysis) is conducted at step S6, and the amplitudes (F(1), F(2), F(3), ..., F(Np)) of the target spectral components specified as the period components corresponding to the integer multiples of the rotational frequency Vp of the crankshaft (Vp, 2 x vp, 3 x Vp, Np x Vp) are determined at step S7.

On the other hand, the reference spectral components to be used as the reference of a diagnosis are determined in the same manner with the spectral components (F01, F02, F03, .... , F0N) which are obtained during the normal operation of the reduction gear (when crankshaft is normal) added by a margin (allowance) as the threshold values (Lfl, Lf2, Lf3, .... , LfN). If the margin is set small, this can be used, not for prediction of an abnormality (sign of faults), but for discovery of an abnormality (discovery of faults).

Finally, at step S8, the amplitude of the target spectral components to be diagnosed is compared with the amplitude of the reference spectral components, and when for example, any one of the amplitude of the target spectral components to be diagnosed exceeds the amplitude of the reference spectral components, the reduction gear is regarded as an abnormality, and an alarm sound is outputted at step 9. Here, if an emergency stop is added to the output of an alarm, the apparatus can be used as an emergency stop for stopping the robot 5 in case of a fault.

It is also possible to diagnose an abnormality by starting the operating program for diagnosing an abnormality at a predetermined interval T and calculating an increment value of the spectral component to be diagnosed and comparing the increment value with a reference threshold value. That is, (current F(1) - previous F(1))/T, (current F(2)- previous F(2))/T, ........ , (current F(Np) - previous F(Np))/T may be used for estimating the presence or absence of an abnormality.

As has been described above, in accordance with the present embodiment, the estimated disturbance value can be used to predict an abnormality of the crankshaft, and the effect of noise and the influence of gravity can be thereby eliminated. Therefore, an abnormality of the reduction gear can be directly and accurately predicted based on quantitative criteria for estimation. By conducting the diagnosis periodically at a regular interval, the timing for replacement of the crankshaft can be recognized in advance so that the efficiency of the maintenance or restoration work of the robot 5 can be substantially improved.

Although an abnormality of a reduction gear mounted on a robot is diagnosed in this embodiment, it is also possible to diagnose an abnormality of a reduction gear mounted on a machine tool or a vehicle. Although an abnormality of a reduction gear is diagnosed based on frequency components of the estimated disturbance value estimated from the torque instruction and the velocity feedback-value in this embodiment, it is also possible to diagnose an abnormality of a reduction gear based on frequency components of acceleration calculated from the velocity feedback-value obtained when a pair of moving members move relatively at a constant velocity.

Although, in the present embodiment, an alarm is outputted when an abnormality of the reduction gear is diagnosed, it is also possible to alert an operator to an abnormality by highlighting only the portion representing the reduction gear on a screen of the display 22 of the terminal apparatus 4 that displays a model of the robot 5 provided with the reduction gear. Although, in the present embodiment, the operating program is started by inputting the necessary information via a keyboard, it is also possible to start the operating program by using a pointing device or the like, to designate the portion representing the reduction gear on a screen of the display 22 displaying the model of the robot 5 provided with the reduction gear.

## Claims

1. A method of diagnosing an abnormality of a reduction gear, the reduction gear including an intermediate shaft element disposed between an input shaft and an output shaft and rotating in proportion to a rotation of the input shaft to transmit the rotation to the output shaft,
**characterized in that** the method comprises:
estimating, by means of a disturbance observer (23), an estimated disturbance value regarding said reduction gear based on a torque instruction value and a velocity feedback-value acquired when a pair of driven members that rotate relative to each other with a motor as a driving source are in relative rotation at a constant velocity;
extracting a specific spectral component corresponding to a constant multiple of a rotational frequency of the intermediate shaft element from a frequency component of the estimated disturbance value obtained by frequency analysis;
comparing the amplitude of the specific spectral component with a threshold value; and
diagnosing an abnormality in a case where the amplitude of the specific spectral component exceeds the threshold value, or a normality in a case where the amplitude of the specific spectral component is equal to or less than the threshold value.

2. A method of diagnosing an abnormality of a reduction gear, the reduction gear including an intermediate shaft element disposed between an input shaft and an output shaft and rotating in proportion to a rotation of the input shaft to transmit the rotation to the output shaft,
**characterized in that** the method comprises:
calculating an acceleration based on a velocity feedback-value acquired when a pair of driven members that rotate relative to each other with a motor as a driving source are in relative rotation at a constant velocity;
extracting a specific spectral component corresponding to a constant multiple of a rotational frequency of the intermediate shaft element, from a frequency component of the acceleration obtained by frequency analysis;
comparing an amplitude of the specific spectral component with a threshold value; and
diagnosing an abnormality in a case where the amplitude of the specific spectral component exceeds the threshold value, or a normality in a case where the amplitude of the specific spectral component is equal to or less than the threshold value.

3. A method of diagnosing an abnormality of a reduction gear according to claim 1 or 2,
**characterized in that** the threshold value is equivalent to an amplitude of a spectral component extracted, in correspondence to a constant multiple of the rotational frequency of the intermediate shaft element, from frequency components of the estimated disturbance value or the acceleration obtained by frequency analysis when the intermediate shaft element is a normality.

4. A method of diagnosing an abnormality of a reduction gear according to claim 1 or 2,
**characterized in that**, when the amplitude of the specific spectral component exceeds the threshold value, warning information of the reduction gear is outputted to the outside.

5. A method of diagnosing an abnormality of a reduction gear according to claim 4,
**characterized in that** the warning information of the abnormality is outputted by highlighting a portion representing the reduction gear on a screen of a display device (22) displaying a model of a robot (5) provided with the reduction gear.

6. A method of diagnosing an abnormality of a reduction gear according to claim 1 or 2,
**characterized in that**, for diagnosing the abnormality of the reduction gear, the portion representing the reduction gear is designated on a screen of a display device (22) displaying a model of a robot (5) provided with the reduction gear in order to start a diagnosis.

7. An apparatus (2) for carrying out a method of diagnosing an abnormality of a reduction gear, the reduction gear including an intermediate shaft element disposed between an input shaft and an output shaft and rotating in proportion to a rotation of the input shaft to transmit the rotation to the output shaft,
**characterized in that** the apparatus comprises:
a disturbance observer (23) that obtains an estimated disturbance value regarding the reduction gear, based on a torque instruction value and a velocity feedback-value acquired when a pair of driven members which rotate relative to each other with a motor as a driving source are in relative rotation at a constant velocity;
a specific spectral component specifying portion (24) for extracting a specific spectral component corresponding to a constant multiple of a rotational frequency of the intermediate shaft element from a frequency component of the estimated disturbance value obtained by frequency analysis; and
a diagnosing portion (25) which compares the amplitude of the specific spectral component specified by the specific spectral component specifying portion (24) with a threshold value, and diagnoses an abnormality in a case where the amplitude of the specific spectral component exceeds the threshold value, or a normality in a case where the amplitude of the specific spectral component is equal to or less than the threshold value.

## Patentansprüche

1. Verfahren zum Erkennen eines ungewöhnlichen Verhaltens eines Untersetzungsgetriebes, wobei das Untersetzungsgetriebe ein zwischenliegendes Wellenelement aufweist, welches zwischen einer Eingangswelle und einer Ausgangswelle angeordnet ist und sich proportional zu einer Drehung der Eingangswelle dreht, um die Drehung an die Ausgangswelle zu übertragen,
**dadurch gekennzeichnet, dass** das Verfahren umfasst:
Schätzen, mittels eines Störgrößenbeobachters (23), eines geschätzten Störgrößenwerts in Bezug auf das Untersetzungsgetriebe basierend auf einem Drehmoment-Instruktionswert und einem Geschwindigkeits-Feedbackwert, welche erfasst werden, wenn ein Paar von angetriebenen Elementen, die sich relativ zueinander drehen mit einem Motor als einer Antriebsquelle, sich in relativer Drehung bei einer konstanten Geschwindigkeit befindet;
Extrahieren einer bestimmten Spektralkomponente, welche einem konstanten Vielfachen einer Drehfrequenz des zwischenliegenden Wellenelements entspricht, aus einer Frequenzkomponente des geschätzten Störgrößenwerts, welche durch Frequenzanalyse erhalten wird;
Vergleichen der Amplitude der bestimmten Spektralkomponente mit einem Schwellenwert; und
Erkennen eines ungewöhnlichen Verhaltens in einem Fall, in dem die Amplitude der bestimmten Spektralkomponente den Schwellenwert übersteigt, oder eines gewöhnlichen Verhaltens in einem Fall, in dem die Amplitude der bestimmten Spektralkomponente gleich oder kleiner als der Schwellenwert ist.

2. Verfahren zum Erkennen eines ungewöhnlichen Verhaltens eines Untersetzungsgetriebes, wobei das Untersetzungsgetriebe ein zwischenliegendes Wellenelement aufweist, welches zwischen einer Eingangswelle und einer Ausgangswelle angeordnet ist und sich proportional zu einer Drehung der Eingangswelle dreht, um die Drehung an die Ausgangswelle zu übertragen,
**dadurch gekennzeichnet, dass** das Verfahren umfasst:
Berechnen einer Beschleunigung basierend auf einem Geschwindigkeits-Feedbackwert, welcher erfasst wird, wenn ein Paar von angetriebenen Elementen, die sich relativ zueinander drehen mit einem Motor als einer Antriebsquelle, sich in relativer Drehung bei einer konstanten Geschwindigkeit befindet;
Extrahieren einer bestimmten Spektralkomponente, welche einem konstanten Vielfachen einer Drehfrequenz des zwischenliegenden Wellenelements entspricht, aus einer Frequenzkomponente der Beschleunigung, welche durch Frequenzanalyse erhalten wird;
Vergleichen einer Amplitude der bestimmten Spektralkomponente mit einem Schwellenwert; und
Erkennen eines ungewöhnlichen Verhaltens in einem Fall, in dem die Amplitude der bestimmten Spektralkomponente den Schwellenwert übersteigt, oder eines gewöhnlichen Verhaltens in einem Fall, in dem die Amplitude der bestimmten Spektralkomponente gleich oder kleiner als der Schwellenwert ist.

3. Verfahren zum Erkennen eines ungewöhnlichen Verhaltens eines Untersetzungsgetriebes nach Anspruch 1 oder 2,
**dadurch gekennzeichnet, dass** der Schwellenwert einer Amplitude einer Spektralkomponente entspricht, welche, entsprechend einem konstanten Vielfachen der Drehfrequenz des zwischenliegenden Wellenelements, aus Frequenzkomponenten des geschätzten Störgrößenwerts oder der Beschleunigung extrahiert wird, welche durch Frequenzanalyse erhalten werden, wenn das zwischenliegende Wellenelement gewöhnliches Verhalten aufweist.

4. Verfahren zum Erkennen eines ungewöhnlichen Verhaltens eines Untersetzungsgetriebes nach Anspruch 1 oder 2,
**dadurch gekennzeichnet, dass** dann, wenn die Amplitude der bestimmten Spektralkomponente den Schwellenwert übersteigt, Warninformation des Untersetzungsgetriebes nach außen ausgegeben wird.

5. Verfahren zum Erkennen eines ungewöhnlichen Verhaltens eines Untersetzungsgetriebes nach Anspruch 4,
**dadurch gekennzeichnet, dass** die Warninformation des ungewöhnlichen Verhaltens ausgegeben wird durch Hervorheben eines Teils, der das Untersetzungsgetriebe repräsentiert, auf einem Bildschirm eines Anzeigegeräts (22), welches ein Modell eines Roboters (5) anzeigt, der mit dem Untersetzungsgetriebe ausgestattet ist.

6. Verfahren zum Erkennen eines ungewöhnlichen Verhaltens eines Untersetzungsgetriebes nach Anspruch 1 oder 2,
**dadurch gekennzeichnet, dass** zum Erkennen des ungewöhnlichen Verhaltens des Untersetzungsgetriebes der Teil, der das Untersetzungsgetriebe repräsentiert, auf einem Bildschirm eines Anzeigegeräts (22) bezeichnet ist, welches ein Modell eines Roboters (5) anzeigt, der mit dem Untersetzungsgetriebe ausgestattet ist, um eine Erkennung zu starten.

7. Vorrichtung (2) zum Ausführen eines Verfahrens zum Erkennen eines ungewöhnlichen Verhaltens eines Untersetzungsgetriebes, wobei das Untersetzungsgetriebe ein zwischenliegendes Wellenelement aufweist, welches zwischen einer Eingangswelle und einer Ausgangswelle angeordnet ist und sich proportional zu einer Drehung der Eingangswelle dreht, um die Drehung an die Ausgangswelle zu übertragen,
**dadurch gekennzeichnet, dass** die Vorrichtung umfasst:
einen Störgrößenbeobachter (23), welcher einen geschätzten Störgrößenwert in Bezug auf das Untersetzungsgetriebe erhält, basierend auf einem Drehmoment-Instruktionswert und einem Geschwindigkeits-Feedbackwert, welche erfasst werden, wenn ein Paar von angetriebenen Elementen, welche sich relativ zueinander drehen mit einem Motor als einer Antriebsquelle, sich in relativer Drehung bei einer konstanten Geschwindigkeit befindet;
einen eine bestimmte Spektralkomponente bestimmenden Teil (24) zum Extrahieren einer bestimmten Spektralkomponente, welche einem konstanten Vielfachen einer Drehfrequenz des zwischenliegenden Wellenelements entspricht, aus einer Frequenzkomponente des geschätzten Störgrößenwerts, welche durch Frequenzanalyse erhalten wird; und
einen erkennenden Teil (25), welcher die Amplitude der bestimmten Spektralkomponente, welche durch den die bestimmte Spektralkomponente bestimmenden Teil (24) bestimmt wird, mit einem Schwellenwert vergleicht, und ein ungewöhnliches Verhalten erkennt in einem Fall, in dem die Amplitude der bestimmten Spektralkomponente den Schwellenwert übersteigt, oder ein gewöhnliches Verhalten in einem Fall, in dem die Amplitude der bestimmten Spektralkomponente gleich oder kleiner als der Schwellenwert ist.

## Revendications

1. Procédé de diagnostic d'une anomalie d'un engrenage de réduction, l'engrenage de réduction incluant un élément d'arbre intermédiaire disposé entre un arbre d'entrée et un arbre de sortie et tournant en proportion à une rotation de l'arbre d'entrée pour transmettre la rotation à l'arbre de sortie,
**caractérisé en ce que** le procédé comprend:
l'estimation, au moyen d'un dispositif d'observation de perturbations (23), d'une valeur de perturbation estimée concernant ledit engrenage de réduction sur la base d'une valeur d'instruction de couple et d'une valeur de retour de vélocité acquise lorsqu'une paire d'élément entraînés qui tournent l'un par rapport à l'autre avec un moteur comme source d'entraînement sont en rotation relative à une vélocité constante;
l'extraction d'une composante spectrale spécifique correspondant à un multiple constant d'une fréquence de rotation de l'élément d'arbre intermédiaire d'une composante de fréquence de la valeur de perturbation estimée obtenue par analyse de fréquence;
la comparaison de l'amplitude de la composante spectrale spécifique avec une valeur de seuil; et
le diagnostic d'une anomalie dans un cas où l'amplitude de la composante spectrale spécifique excède la valeur de seuil, ou d'une normalité dans un cas où l'amplitude de la composante spectrale spécifique est égale ou inférieure à la valeur de seuil.

2. Procédé de diagnostic d'une anomalie d'un engrenage de réduction, l'engrenage de réduction incluant un élément d'arbre intermédiaire disposé entre un arbre d'entrée et un arbre de sortie et tournant en proportion à une rotation de l'arbre d'entrée pour transmettre la rotation à l'arbre de sortie,
**caractérisé en ce que** le procédé comprend:
le calcul d'une accélération sur la base d'une valeur de retour de vélocité acquise lorsqu'une paire d'élément entraînés qui tournent l'un par rapport à l'autre avec un moteur comme source d'entraînement sont en rotation relative à une vélocité constante;
l'extraction d'une composante spectrale spécifique correspondant à un multiple constant d'une fréquence de rotation de l'élément d'arbre intermédiaire d'une composante de fréquence de l'accélération obtenue par analyse de fréquence;
la comparaison de l'amplitude de la composante spectrale spécifique avec une valeur de seuil; et
le diagnostic d'une anomalie dans un cas où l'amplitude de la composante spectrale spécifique excède la valeur de seuil, ou d'une normalité dans un cas où l'amplitude de la composante spectrale spécifique est égale ou inférieure à la valeur de seuil.

3. Procédé de diagnostic d'une anomalie d'un engrenage de réduction selon la revendication 1 ou 2,
**caractérisé en ce que** la valeur de seuil est équivalente à une amplitude d'une composante spectrale extraite, en correspondance à un multiple constant de la fréquence de rotation de l'élément d'arbre intermédiaire, de composantes de fréquence de la valeur de perturbation estimée ou de l'accélération obtenue par analyse de fréquence lorsque l'élément d'arbre intermédiaire est une normalité.

4. Procédé de diagnostic d'une anomalie d'un engrenage de réduction selon la revendication 1 ou 2,
**caractérisé en ce que**, lorsque l'amplitude de la composante spectrale spécifique excède la valeur de seuil, une information d'avertissement de l'engrenage de réduction est délivrée en sortie vers l'extérieur.

5. Procédé de diagnostic d'une anomalie d'un engrenage de réduction selon la revendication 4,
**caractérisé en ce que** l'information d'avertissement de l'anomalie est délivrée en sortie en mettant en surbrillance une partie représentant l'engrenage de réduction sur un écran d'un dispositif d'affichage (22) affichant un modèle d'un robot (5) prévu avec l'engrenage de réduction.

6. Procédé de diagnostic d'une anomalie d'un engrenage de réduction selon la revendication 1 ou 2,
**caractérisé en ce que**, pour diagnostiquer l'anomalie de l'engrenage de réduction, la partie représentant l'engrenage de réduction est désignée sur un écran d'un dispositif d'affichage (22) affichant un modèle d'un robot (5) prévu avec l'engrenage de réduction afin de démarrer un diagnostic.

7. Appareil (2) pour mettre en oeuvre un procédé de diagnostic d'une anomalie d'un engrenage de réduction, l'engrenage de réduction incluant un élément d'arbre intermédiaire disposé entre un arbre d'entrée et un arbre de sortie et tournant en proportion à une rotation de l'arbre d'entrée pour transmettre la rotation à l'arbre de sortie,
**caractérisé en ce que** le procédé comprend:
un dispositif d'observation de perturbations (23) qui obtient une valeur de perturbation estimée concernant l'engrenage de réduction sur la base d'une valeur d'instruction de couple et d'une valeur de retour de vélocité acquise lorsqu'une paire d'élément entraînés qui tournent l'un par rapport à l'autre avec un moteur comme source d'entraînement sont en rotation relative à une vélocité constante;
une partie de spécification de composante spectrale spécifique (24) pour extraire une composante spectrale spécifique correspondant à un multiple constant d'une fréquence de rotation de l'élément d'arbre intermédiaire d'une composante de fréquence de la valeur de perturbation estimée obtenue par analyse de fréquence; et
une partie de diagnostic (25) qui compare l'amplitude de la composante spectrale spécifique spécifiée par la partie de spécification de composante spectrale spécifique (24) avec une valeur de seuil, et diagnostique une anomalie dans un cas où l'amplitude de la composante spectrale spécifique excède la valeur de seuil, ou une normalité dans un cas où l'amplitude de la composante spectrale spécifique est égale ou inférieure à la valeur de seuil.
